# EUROPÄISCHE PATENTSCHRIFT

(11) **EP 0 383 254 B1**
(45) Veröffentlichungstag und Bekanntmachung des Hinweises auf die Patenterteilung: **29.09.1993**
(21) Anmeldenummer: 90102780.5
(22) Anmeldetag: 13.02.1990
(51) Int. Cl.: B62B 3/06

(54) **Hubwagen mit einer in vertikaler Richtung federbelasteten vorgespannten Antriebseinheit**
Lift-truck with a vertically spring-preloaded drive unit
Chariot élévateur avec un élément de propulsion précontraint verticalement par ressorts

(30) Priorität: 17.02.1989 DE 3904798
(43) Veröffentlichungstag der Anmeldung: 22.08.1990
(73) Patentinhaber: Wagner Fördertechnik GmbH & Co KG, 72760 Reutlingen (DE)
(72) Erfinder: Prinz, Eugen, D-7410 Reutlingen (DE)

(56) Entgegenhaltungen:
- EP-A- 0 209 502
- FR-A- 2 313 306

## Beschreibung

Die Erfindung betrifft einen Hubwagen, vorzugsweise deichselgesteuerten Gehhubwagen, mit einer in vertikaler Richtung federbelastet vorgespannten Antriebseinheit, die mittels einer Hebelparallelogramm-Aufhängung an einem nicht anhebbaren Rahmenteil des Hubwagens höhenausgleichbar angelenkt und deren Bodenkontaktdruck lastkraftabhängig variierbar ist und mit einem Hubzylinder für den Niederhub (Basishub) von anhebbaren Rahmenteilen.

Aus der DE-PS 31 06 027 ist ein Hublader mit einem höhenausgleichbaren Radnabenantrieb bekannt, bei dem zwecks Verringerung des Kippmomentes mit zunehmender Hubhöhe und/oder Belastung die Vorspannung zumindest einer Feder eines verfederten Radnabenantriebes vermindert wird, wodurch der Bodenkontaktdruck in unbeladenem Zustand am größten und dadurch die Lenkung am schwergängigsten ist. Da mit dieser Einrichtung primär der Kippneigung des Fahrzeugs entgegengewirkt werden soll, beschränkt sich deren Einsatz vorrangig auf Hochhubwagen. Für Niederhubwagen ist dieses System weniger geeignet, da bei diesen Fahrzeugen in der Regel keine Kippgefahr besteht, sondern statt dessen eine Optimierung der Antriebs-, Lenk-, und Bremskräfte angestrebt wird. Insbesondere letztere dürften aufgrund des sich mit steigender Zuladung stetig verringernden Bodenkontaktes in Frage gestellt sein. Abgesehen davon ist diese Einrichtung aufgrund des Einsatzes aufwendiger hydraulischer Mittel störanfällig und wartungsintensiv und deren Anwendungsbereich auf Hublader der Bauart beschränkt, die mit Radnabenantrieben ausgestattet sind.

Bei einem anderen in der EP-AO 150 830 offenbarten deichselgelenkten Fördergerät wird ein zwischen zwei seitlichen Stutzrädern angeordnetes Antriebsrad durch vorspannbare Federmittel in Bodeneingriff gedrückt, wobei die Grundeinstellung des Antriebsraddruckes möglichst gering gehalten und über eine komplizierte Vorspanneinrichtung mit einer Vielzahl elektrohydraulischer Stellelemente in Abhängigkeit von einem bestimmten Betriebsparamenter - vorzugsweise einem Bremsvorgangeinleitungssignal - erhöht wird. Als alternative Betriebsparameter können statt dessen die Fahrbahnneigung, das Belastungsmoment des Antriebsmotors, die Bodenbeschaffenheit oder ein manuell auslösbares Willkürsignal herangezogen werden. Dieser Einrichtung hängt der Nachteil an, daß die ständig variierenden Belastungszustände des Fördergerätes nicht ausreichend berücksichtigt werden. Obwohl die Deichsel für den Bedienungsmann fast durchweg leichtgängig bedienbar bleibt, ist es aus sicherheitstechnischen Gründen äußerst fraglich, den unter allen Umständen einzuhaltenden Bremsweg von der Funktion einer Vielzahl elektro-hydraulischer Stellelemente, wie z. B. Schalter, Ventile, Hydrospeicher und Hydraulikzylinder, abhängig zu machen, da bei einem Ausfall eines derselben der zum Einhalten des Bremsweges erforderliche Antriebsraddruck gegenüber der Fahrbahn aufgehoben wird und das Antriebsrad in einer Art Gleitreibung durchrutschen kann, wodurch die Gefahr besteht, daß der Bremsweg in unzulässiger Weise verlängert wird.

Gemäß einer in der EP-AO 209 502 beschriebenen Vorrichtung zum Erhöhen der Bremskraft in industriellen Förderwagen ist bereits die Bedeutung der Abhängigkeit des Bremsvorganges von den unterschiedlichen Ladezuständen des Förderwagens erkannt worden. Aufgrund dessen wird dort schon sinnvollerweise die Zuladung des Förderwagens bei der Erhöhung des Antriebsraddruckes berücksichtigt, in der Form, daß die Federvorspannung einer Feder einer elastisch aufgehängten Antriebseinheit über eine separate hydraulische Verstelleinrichtung belastungsabhängig erhöht wird, um dadurch den Antriebsraddruck zu vergrößern. Diese Einrichtung erscheint in ihrem Aufbau und ihrer Funktion relativ kompliziert, was neben erheblichen Herstellungskosten auch mit einer eingeschränkten Betriebssicherheit infolge nicht auszuschließender Störanfälligkeit durch Fehlfunktion oder Versagen eines hydraulischen Stellgliedes verbunden ist.

Der Erfindung liegt die Aufgabe zugrunde, bei einem Hubwagen der gattungsgemäßen Art mit einem Minimum an Aufwand und Herstellungskosten eine einfach funktionierende und dadurch betriebssichere Einrichtung zu schaffen, mit der einerseits die erforderliche Lenkkraft für die mit dem Antrieb verbundene Fahrdeichsel während des Fahrbetriebes minimiert und andererseits die für den jeweiligen Belastungszustand erforderliche Brems- bzw. Antriebskraft durch eine kontinuierliche Anpassung des Antriebsraddruckes an die Lastverhältnisse gewährleistet werden kann.

Die derart gestellte Aufgabe wird erfindungsgemäß dadurch gelöst, daß der Hubzylinder sich unter Ausnutzung seiner Hubkraft gegensinnig abstützend direkt zwischen dem anhebbaren Rahmenteil des Hubwagens und der Hebelparallelogramm-Aufhängung angeordnet ist. Die rein mechanische Ausnutzung der von der in jedem Hubwagen ohnehin vorhandenen Arbeitshydraulik erzeugten Kräfte zur Aufrechterhaltung des sowohl zur Übertragung des Antriebs- als auch des Bremsmomentes erforderlichen Bodenkontaktdruckes stellt zweifelsohne eine besonders kostengünstige Lösung dar, die sich nicht nur durch hohe Betriebssicherheit sondern insbesondere auch durch geringen Wartungsbedarf auszeichnet.

Gemäß einer vorteilhaften Ausgestaltung der Erfindung ist zur Abstutzung des Hubzylinders in Hubrichtung das anhebbare Rahmenteil als lastrahmenfixierte Stütz- und Führungsplatte für einen Hubkolben des Hubzylinders ausgebildet, wodurch derselbe in einfacher Weise optimal gestützt und geführt wird.

In besonders sinnvoller geometrischer Anordnung der Bauelemente ist der Hubzylinder zur Abstützung in Senkrichtung in einem bestimmten Hebelverhältnis in der Hebelparallelogramm-Aufhängung drehbar gelagert und zumindest ein Teil seiner Abstützkraft über einen von zwei durch den Lagerpunkt gebildeten Hebelarme auf die Antriebseinheit übertragbar, was das Erfordernis der Verwendung elektrischer oder hydraulischer Zusatzelemente ausschließt.

Zur Berücksichtigung unterschiedlicher Nutzlastverhältnisse ist die Abstützkraft des Hubzylinders beladungsabhängig zur Vergrößerung des Bodenkontaktdruckes eines Antriebsrades der Antriebseinheit vorgesehen.

In Weiterbildung des Erfindungsgedankens ist der Hubzylinder mit einem Freilauf versehen, der bei abgesenktem Hubwagen ein Auslenken der Antriebseinheit vertikal nach unten ermöglicht. Dabei ist der Freilauf als zwischen der Oberseite der Stütz- und Führungsplatte und dem oberen Ende des Hubkolbens des Hubzylinders vorgesehener Resthub ausgebildet, wodurch zweckmäßigerweise ein Befahren unebener Fahrbahnoberflächen mit Bodenvertiefungen ermöglicht wird, ohne daß sich der Bodenkontaktdruck zwischen Antriebsrad und Fahrbahnoberfläche aufhebt.

Eine bevorzugte Weiterbildung der Erfindung besteht darin, daß der Hubzylinder zwecks vorwählbarer Veränderung der Hebelverhältnisse am Querhebel der Parallelogramm-Aufhängung in Längsrichtung des Hubwagens manuell und/oder automatisch verschiebbar und arretierbar ist, wodurch der Bedienungsmann geänderten Betriebszuständen und unterschiedlichen Fahrbahnoberflächen durch überlagerten und vorwählbaren Stelleingriff am Hubwagen Rechnung tragen kann.

Zwecks Grundeinstellung des für den unbeladenen Hubwagen notwendigen Antriebsraddruckes ist zur federbelasteten Vorspannung der Antriebseinheit zwischen dem nichtanhebbaren Rahmenteil und einem antriebsfesten Bauteil zumindest eine Druckfeder angeordnet. Damit Gerätetype, Bauart und Eigengewicht des Hubwagens ausreichend berücksichtigt werden können, ist die Vorspannung der Druckfeder, vorzugsweise mittels einer Spannmutter, beliebig einstellbar.

Weitere vorteilhafte Ausgestaltungen der Erfindung sind in den Ansprüchen 5-7 sowie in der nachfolgenden Beschreibung niedergelegt.

Die Erfindung läßt mehrere Ausführungsformen zu, von denen zwei exemplarisch in den Figuren dargestellt und nachfolgend beschrieben werden. Es zeigt:
**Fig. 1** eine Seitenansicht eines Niederhubwagens im angehobenem Zustand mit schematisch dargestelltem Antrieb,
**Fig. 2** eine Draufsicht auf den Niederhubwagen gemäß Fig. 1,
**Fig. 3** eine Seitenansicht eines Hochhubwagens mit angehobenem Basishub und schematisch dargestelltem Antrieb,
**Fig. 4** eine Draufsicht auf den Hochhubwagen gemäß Fig. 3,
**Fig. 5** eine detaillierte Darstellung des Antriebes als Ausschnitt der Figuren 1 und 3.

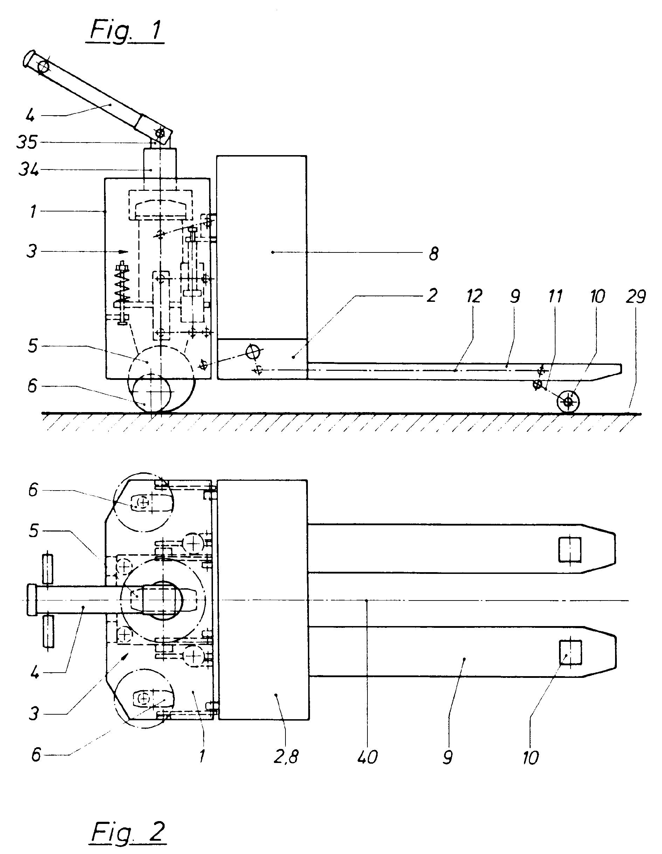

Die Figuren 1 und 2 zeigen eine Ausführung eines Niederhubwagens im angehobenem Zustand mit bekannter Grundkonzeption des Fahrzeugaufbaus. Dieser besteht im wesentlichen aus einem nicht anhebbaren Rahmenteil in Form eines Antriebsrahmens 1 und einem dahinter angeordneten und mit diesem gelenkig verbundenen, anhebbaren Rahmenteil in Form eines Lastrahmens 2. Der Antriebsrahmen 1 beinhaltet eine Antriebseinheit 3 und ist an seinem nach oben ragenden Ende mit einer Fahrdeichsel 4 ausgestattet, mit der sich - neben der Steuerung diverser Fahrzeugfunktionen - ein mittig an der Unterseite des Antriebsrahmens 1 angeordnetes Antriebsrad 5 in bekannter und deshalb nicht näher dargestellter und beschriebener Weise lenken und bremsen läßt. Der Antriebsrahmen 1 wird außerdem von zwei im wesentlichen festen Schwenkrollen 6 getragen. Diese sind beidseitig des Antriebsrades 5 in größtmöglichem Abstand zueinander in einem am Antriebsrahmen 1 befestigten, vorzugsweise angeschweißten Lagersteg 7 gelagert, um einer Kippneigung des Hubwagens entgegenzuwirken.

Der Lastrahmen 2 trägt u. a. eine Energieversorgungseinheit 8 und ist mit Lasttragemitteln in Form zweier Lastarme 9 ausgestattet. Er wird von Lastrollen 10 getragen, welche endseitig der Lastarme 9 in schwenkbaren Radgabeln 11 gelagert sind. Diese sind über ein schematisch strichpunktiert angedeutetes Zug- oder Druckgestänge 12 von einer abgesenkten in eine erhöhte Lage verschwenkbar, wodurch sich der in beiden Ausführungsformen des Hubwagens vorhandene Niederhub (Basishub) bewirken läßt. Dabei kann es bauartbedingt auch zweckmäßig sein, die Energieversorgungseinheit 8 dem nicht anhebbaren Antriebsrahmen 1 zuzuordnen und/oder Lasttragemittel anderer bekannter Bauart, beispielsweise mit mehreren Freiheitsgraden, einzusetzen.

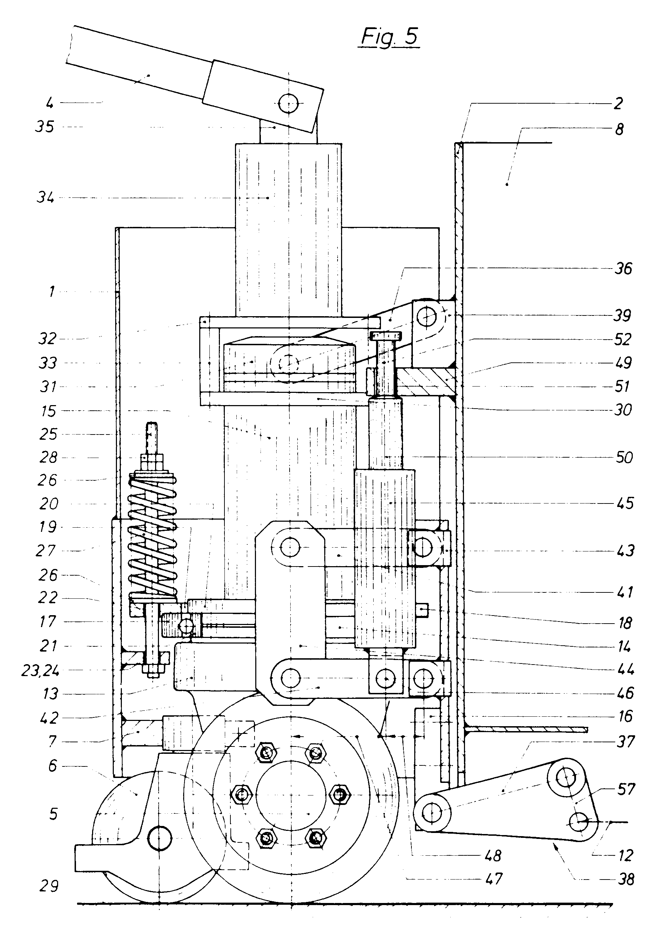

Die im Antriebsrahmen 1 untergebrachte Antriebseinheit 3 zeigt von unten nach oben gesehen im wesentlichen folgenden Aufbau auf, der in Fig. 5 dargestellt ist.

Das Antriebsrad 5 ist an einem Getriebe 13 befestigt, das über ein Drehkranzlager 14 mit einem Fahrmotor 15 gekoppelt ist. Über dem Drehkranzlager 14 und mit dessen Außenring 17 fest verbunden ist eine Getriebeplatte 18 rechteckigen Querschnitts angeordnet, die neben einer mittigen Bohrung 19 in ihrem dem Lastrahmen 2 entgegengesetzten Bereich noch 2 kleinere Bohrungen 22 aufweist. In der mittigen Bohrung 19 ist der Fahrmotor 15 mittels eines unteren Motorflansches 20 an den Lagerinnenring 21 des Drehkranzlagers 14 angeflanscht. Antriebsrad 5 und Getriebe 13 bilden dergestalt eine zusammen verdrehbare Einheit.

Unterhalb der Getriebeplatte 18 sind am Antriebsrahmen 1 zwei als Flachteile ausgebildete Spannplatten 23 befestigt. In diese sind vertikal fluchtend zu den Bohrungen 22 ebenfalls Bohrungen 24 gleichen Durchmessers eingebracht. Durch die Bohrungen 22 und 24 erstreckt sich ein beidseitig mit Gewindeenden versehener Spannbolzen 25, auf dem über der Getriebeplatte 18 zwischen zwei Federtellern 26 zumindest ein Federmittel 27 angeordnet ist, das im Ausführungsbeispiel gemäß Figur 5 als Druckfeder ausgebildet ist. In Abhängigkeit von der Fahrzeugtype können bauartbedingt statt dessen auch Tellerfedern oder hydraulische, pneumatische bzw. hydropneumatische Federmittel 27 zur Anwendung kommen.

Der Spannbolzen 25 ist an seinen beiden Gewindeenden mit Muttern 28 gesichert, von denen die über dem oberen Federteller 26 angeordnete als verstellbare Spannmutter dient. Mit deren Hilfe läßt sich die Vorspannung der Druckfeder 27 in Abhängigkeit vom Eigengewicht des Hubwagens nicht nur voreinstellen, sondern bei Bedarf jederzeit in beliebiger Weise regulieren. Eine mittels eines oberen Motorflansches 30 auf den Fahrmotor 15 aufgeflanschte Motorbremse 31 kann als elektrische Magnetbremse oder statt dessen auch als von der Deichsel 4 aus betätigbare mechanische Bremse ausgebildet sein.

Oberhalb der Motorbremse 31 ist ein Deichselflansch 32 angeordnet, der mittels Distanzbüchsen 33 mit dem oberen Motorflansch 30 verschraubt ist. Auf dem derart gebildeten Gehäuse stützt sich ein Deichselaufbau 34 mit einem Deichsellager 35 ab.

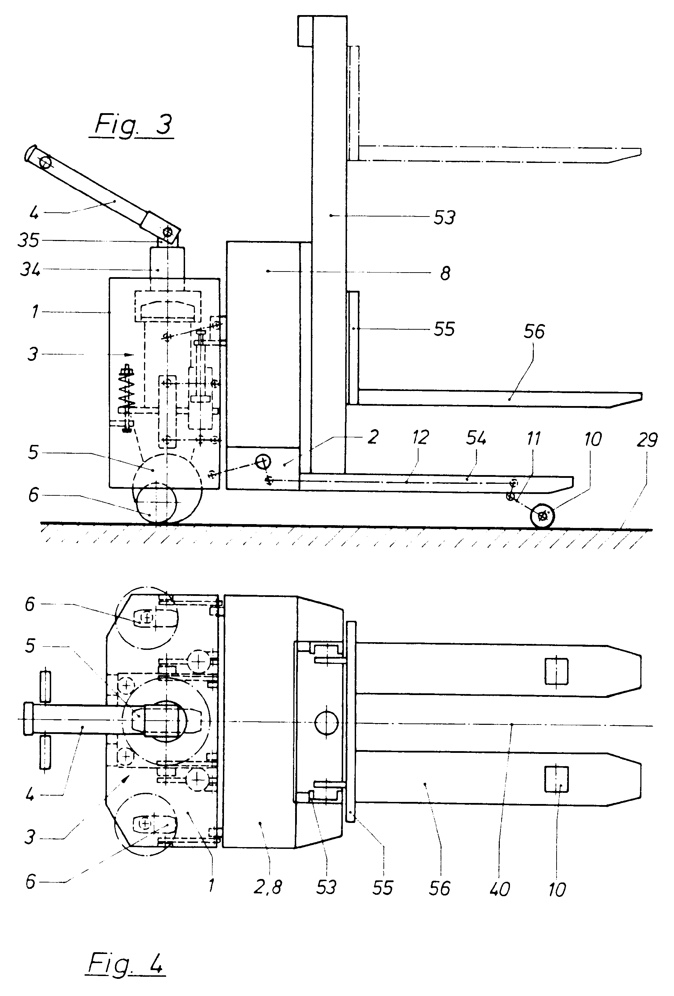

Die gelenkige Verbindung zwischen Antriebsrahmen 1 und Lastrahmen 2 wird über ein beidseitig der Antriebseinheit 3 angeordnetes Parallelogramm 36, 37, 38, hergestellt, das einerseits aus zwei oberen Schwinghebeln 36 und andererseits aus zwei langen Hebelschenkeln 37 eines unteren Winkelhebelpaares 38 gebildet wird. Das eine Ende eines jeden Schwinghebels 36 ist in einer Gehäuseausladung 39 des Lastrahmens 2 gelagert, während ihr anderes Ende seitlich am Antriebsrahmen 1 angelenkt ist. Jeder Winkelhebel 38 ist in einer Befestigungsplatte 16 gelagert, die ihrerseits im unteren Bereich der quer zur Längsachse 40 des Hubwagens verlaufenden Seite des Antriebsrahmen 2 fixiert ist. In einem kurzen Hebelschenkel 57 des Winkelhebels 38 ist das in den Figuren 1 und 3 schematisch angedeutete Zug- oder Druckgestänge 12 für den Niederhub (Basishub) des Hubwagens angelenkt.

Die gesamte Antriebseinheit 3 ist beidseitig mittels je einer Parallelogramm-Aufhängung (41, 42, 44) am Antriebsrahmen 1 höhenausgleichbar befestigt. Diese besteht aus einem Hebelpaar in Form zweier parallel zueinander verlaufender Querhebel 41 und 42, deren eines Ende in Lagerlaschen 43 des Antriebsrahmens 1 gelagert ist. Das andere Ende der Querhebel 41, 42 ist an einem Längshebel 44 angelenkt, der das Hebelparallelogramm schließt und an der Getriebeplatte 18 befestigt, vorzugsweise angeschweißt ist. Durch diese gelenkige und höhennachgiebige Aufhängung kann die Antriebseinheit 3 die zum Ausgleich von Bodenunebenheiten notwendigen Vertikalbewegungen ausführen ohne den Bodenkontakt zu verlieren (Fig. 5).

Wie alle Hubfahrzeuge weist auch der Hubwagen zumindest einen, gemäß den in den Figuren 1-4 dargestellten Ausführungsbeispielen sogar zwei Hubzylinder 45 für den Niederhub (Basishub) des Lastrahmens 2 auf. Der Hubzylinder 45 ist vertikal angeordnet und an seinem unteren Ende zumindest in einem der beiden vorzugsweise horizontal verlaufenden Querhebel 41 bzw. 42 drehbar gelagert. Durch die Wahl der Anordnung des Lagerpunktes 45, der sich in dem in Figur 5 dargestellten Antrieb auf dem unteren Querhebel 42 befindet, wird dieser in zwei Hebelarme 47 und 48 unterteilt. Dabei wird der Lagerpunkt 46 vorzugsweise so gewählt, daß der zum Längshebel 44 gerichtete Hebelarm 47 länger ist als der zum Antriebsrahmen 1 verlaufende Hebelarm 48.

Das obere Ende des Hubzylinders 45 wird in einer am Antriebsrahmen 1 fixierten, vorzugsweise angeschweißten Stütz- und Führungsplatte 49 gehalten, wobei sich der Hubkolben 50 des Hubzylinders 45 durch eine Lagerbohrung 51 der Stütz- und Fuhrungsplatte 49 erstreckt. Der Hubzylinder 45 ist mit einem Freilauf 52 ausgestattet, dergestalt, daß auch noch bei voll abgesenktem Hubkolben 50 zwischen dessen oberem Ende und der Oberseite der Stütz- und Führungsplatte 49 ein Resthub verbleibt (Fig. 5).

Der Antriebsrahmen 1 mit der Antriebseinheit 3 des in den Fig. 3 und 4 dargestellten Hochhubwagens entspricht von seinem Aufbau her dem des zuvor beschriebenen Niederhubwagens gemäß den Fig. 1 und 2. Dagegen unterscheidet sich der Lastrahmen 2 dadurch, daß er zusätzlich einen Hubmast 53 trägt, der sich auf einem Radgabelpaar 54 abstützt und mit einem höhenbeweglichen Hubschlitten 55 versehen ist, an dem die eigentlichen Lasttragemittel 56 angeordnet sind. Obwohl im Ausführungsbeispiel vereinfacht als Lastgabeln ausgebildet, können statt dessen selbstverständlich jegliche Lastaufnahmemittel anderer Bauart, wie z. B. Schwenk-, Schub- oder Schwenkschubgabeln zum Einsatz kommen.

Die Wirkungsweise des erfindungsgemäßen Antriebes wird nachfolgend näher erläutert.

Der für den unbeladenen Hubwagen notwendige Bodenkontaktdruck zwischen dem Antriebsrad 5 und der Fahrbahnoberfläche 1 wird durch die Druckfeder(n) 27 erzeugt. Da dieser Bodenkontaktdruck in Abhängigkeit von der Gerätetype und dem Eigengewicht des Hubwagens variieren kann, läßt sich die Vorspannkraft der Druckfeder(n) 27 in Abhängigkeit von diesen Parametern anhand der Spannmutter 28 voreinstellen. Mit steigender Zuladung auf dem Lastrahmen 2 stützt sich der Hubzylinder 45 mit seinem Hubkolben 50 an der Unterseite der Stütz- und Führungsplatte 49 ab. Die daraus resultierende, der Hubkraft entgegengerichtete Abstützkraft wird Ober den Lagerpunkt 46 in den unteren Querhebel 42 der Hebelparallelogramm-Aufhängung 41, 42, 44 eingeleitet und entsprechend dem dort vorhandenen Hebelverhältnis 47:48 in zwei Kraftkomponenten zerlegt. Während die größere der derart erzeugten Kraftkomponenten über den kurzen Hebelarm 48 in den Antriebsrahmen 1 eingeleitet und von diesem aufgenommen wird, wird die kleinere der Kraftkomponenten über den längeren Hebelarm 47 direkt auf die Antriebseinheit 3 übertragen, wodurch sich der Bodenkontaktdruck des Antriebsrades 5 erhöht. Dabei hat es sich als zweckmäßig erwiesen, das eingebaute Hebelverhältnis 47:48 nicht nur rechnerisch, sondern auch empirisch zu ermitteln.

Es versteht sich von selbst, daß mit steigender Nutzlast-Zuladung die Abstützkraft des Hubzylinders 45 und somit auch die auf das Antriebsrad 5 übertragene zusätzliche Kraftkomponente in dem Maße zunimmt, daß der für den Antrieb und die Bremsung erforderliche, jeweilige Bodenkontaktdruck zwischen dem Antriebsrad 5 und der Fahrbahnoberfläche 29 stets gewährleistet ist. Da das durch Bodenunebenheiten verursachte geringfügige Heben und Senken der Lasttragemitteln 9 bzw. 56 gleichermaßen um das eingebaute Hebelverhältnis 47:48 des unteren Querhebels 42 reduziert wird, ist es von untergeordneter Bedeutung und für den eigentlichen Transport des Ladegutes unerheblich.

Um auch bei abgesenktem Hubwagen ein Befahren von Bodenvertiefungen zu ermöglichen ohne dabei Gefahr zu laufen, gegebenenfalls den Bodenkontaktdruck zwischen dem Antriebsrad 5 und der Fahrbahnoberfläche 29 ganz aufzuheben, ist ein vertikales Auslenken der gesamten Antriebseinheit nach unten erforderlich. Dies wird durch den eingebauten Freilauf 52 an der oberen Lagerstelle des Hubzylinders 45 erreicht, gemäß dem der als Reserve verbleibende Resthub diese Fahrbahnunebenheiten egalisiert.

Somit wird durch die erfindungsgemäße, sinnvolle geometrische Anordnung der ohnehin im Hubwagen vorhandenen, wesentlichen Bauelemente unter zweckmäßiger Ausnutzung der Abstutzkräfte des Hubzylinders 45 eine besonders kostengünstige Lösung der zugrundegelegten Aufgabe erreicht. Diese zeichnet sich insbesondere durch ihre Einfachheit infolge Verzichts auf jegliche elektrischen, hydraulischen oder elektrohydraulischen Zusatzelemente aus, wodurch nicht nur eine kostengünstige, sondern darüber hinaus noch äußerst betriebssichere und relativ wartungsfreie Einrichtung geschaffen wird.

Die Erfindung ist selbstverständlich nicht auf die in den Figuren dargestellten und in der Beschreibung niedergelegten Ausführungsbeispiele beschränkt. Es versteht sich von selbst, daß zahlreiche konstruktive Abwandlungen im Rahmen der Erfindung liegen. So ist es denkbar, die Antriebsaufhängung auf Hubwagen bzw. Fördergeräte anderer Bauart zu übertragen, beispielsweise auf solche, bei denen der Bedienungsmann auf dem Fahrzeug mitfährt. Ebenso ist es im Rahmen des Fachmännischen möglich, den Hubzylinder 45 in Längsachse des Hubwagens durch bekannte mechanische, elektrische, hydraulische oder pneumatische Mittel längsverschiebbar und arretierbar zu gestalten, um dadurch das Hebelverhältnis und somit den Bodenkontaktdruck des Antriebsrades 5 entsprechend den gegebenen Betriebsverhältnissen vorwählbar zu verändern, wobei natürlich der Einsatz automatischer Steuerungsmittel naheliegt. Gleiches gilt auch für die Grundeinstellung der Vorspannung der Druckfeder(n) 27.

## Patentansprüche

1. Hubwagen, vorzugsweise deichselgesteuerter Gehhubwagen, mit einer in vertikaler Richtung federbelastet vorgespannten Antriebseinheit, die mittels einer Hebelparallelogramm-Aufhängung an einem nicht anhebbaren Rahmenteil des Hubwagens höhenausgleichbar angelenkt und deren Bodenkontaktdruck lastkraftabhängig variierbar ist und mit zumindest einem Hubzylinder für den Niederhub (Basishub) eines anhebbaren Rahmenteils,
**dadurch gekennzeichnet,**
daß der Hubzylinder (45) sich unter Ausnutzung seiner Hubkraft gegensinnig abstützend direkt zwischen dem anhebbaren Rahmenteil (49) des Hubwagens und der Hebelparallelogramm-Aufhängung (41, 42, 44) angeordnet ist.

2. Hubwagen nach Anspruch 1,
**dadurch gekennzeichnet,**
daß zur Abstützung des Hubzylinders (45) in Hubrichtung das anhebbare Rahmenteil als lastrahmenfixierte Stütz- und Führungsplatte (49) für einen Hubkolben (50) des Hubzylinders (45) ausgebildet ist.

3. Hubwagen nach Anspruch 1 und/oder 2,
**dadurch gekennzeichnet,**
daß der Hubzylinder (45) zur Abstützung in Senkrichtung in einem bestimmten Hebelverhältnis (47 : 48) in der Hebelparallelogramm-Aufhängung (41, 42, 44) drehbar gelagert und zumindest ein Teil seiner Abstützkraft über einen (47) von zwei durch den Lagerpunkt (46) gebildeten Hebelarme (47, 48) auf die Antriebseinheit (3) übertragbar ist.

4. Hubwagen nach einem oder mehreren der vorangehenden Ansprüche,
**dadurch gekennzeichnet,**
daß die Abstützkraft des Hubzylinders (45) beladungsabhängig zur Vergrößerung des Bodenkontaktdruckes eines Antriebsrades (5) der Antriebseinheit (3) vorgesehen ist.

5. Hubwagen nach einem oder mehreren der vorangehenden Ansprüche,
**dadurch gekennzeichnet,**
daß die Hebelparallelogramm-Aufhängung (41, 42, 44) aus zwei schwenkbaren Querhebeln (41, 42) gebildet wird, die parallel in wählbarem Abstand zueinander an ihrem einen Ende in dem nicht anhebbaren Rahmenteil (1) und an ihrem anderen Ende in einem antriebsfixierten Längshebel (44) drehbar gelagert sind.

6. Hubwagen nach einem oder mehreren der vorangehenden Ansprüche,
**dadurch gekennzeichnet,**
daß die beiden Querhebel (41, 42) horizontal und der Längshebel (44) vertikal angeordnet sind und der Hubzylinder (45) im unteren Querhebel (42) gelagert ist.

7. Hubwagen nach einem oder mehreren der vorangehenden Ansprüche,
**dadurch gekennzeichnet,**
daß der auf die Antriebseinheit drückende Hebelarm (47) länger ist, als der andere Hebelarm (48).

8. Hubwagen nach einem oder mehreren der vorangehenden Ansprüche,
**dadurch gekennzeichnet,**
daß der Hubzylinder (45) mit einem Freilauf (52) versehen ist, der bei abgesenktem Hubwagen ein Auslenken der Antriebseinheit (3) vertikal nach unten ermöglicht.

9. Hubwagen nach einem oder mehreren der vorangehenden Ansprüche,
**dadurch gekennzeichnet,**
daß der Freilauf (52) als zwischen der Oberseite der Stütz- und Führungsplatte (49) und dem oberen Ende des Hubkolbens (50) des Hubzylinders (45) vorgesehener Resthub ausgebildet ist.

10. Hubwagen nach einem oder mehreren der vorangehenden Ansprüche,
**dadurch gekennzeichnet,**
daß der Hubzylinder (45) zwecks vorwählbarer Veränderung des Hebelverhältnisses (47 : 48) am Querhebel (42) der Parallelogramm-Aufhängung (41, 42, 44) in Längsrichtung des Hubwagens manuell und/oder automatisch verschiebbar und arretierbar ist.

11. Hubwagen nach einem oder mehreren der vorangehenden Ansprüche,
**dadurch gekennzeichnet,**
daß zur federbelasteten Vorspannung der Antriebseinheit (3) zwischen dem nicht anhebbaren Rahmenteil (1) und einem antriebsfesten Bauteil (18) zumindest eine Druckfeder (27)angeordnet ist.

12. Hubwagen nach einem oder mehreren der vorangehenden Ansprüche,
**dadurch gekennzeichnet,**
daß die Vorspannung der Druckfeder (17), vorzugsweise mittels einer Spannmutter (28), beliebig einstellbar ist.

## Claims

1. Lift truck, preferably a pedestrian- worked lift truck controlled by a centre pole, having a vertically spring pre-loaded drive unit which is articulated, in a manner such that the level can be compensated, by means of suspension system consisting of levers arranged in a parallelogram on a portion of the lift truck which cannot be raised, and of which the base contact pressure can be varied as a function of the load, and having at least one lifting cylinder for low lifting (basic lifting) of a frame portion which can be raised, characterised in that the lifting cylinder (45) is disposed directly between the frame portion (49) of the lift truck which can be raised and the suspension system consisting of levers arranged in a parallelogram (41, 42, 44) such that it utilises its lifting force and is supported in opposite directions.

2. Lift truck according to Claim 1, characterised in that the frame portion which can be raised is in the form of a supporting and guiding plate (49) which is secured on the load frame for a lifting piston (50) of the lifting cylinder (45) in order to support the lifting cylinder (45) in the lifting direction.

3. Lift truck according to Claim 1 and/or 2, characterised in that, for the purpose of supporting in the vertical direction, the lifting cylinder (45) is rotatably mounted in a specific lever ratio (47: 48) in the suspension system consisting of levers arranged in a parallelogram (41, 42, 44), and at least some of its supporting force can be transmitted to the drive unit (3) by means of one (47) of two lever arms (47, 48) formed by the bearing point (46).

4. Lift truck according to one or more of the preceding claims, characterised in that the supporting force of the lifting cylinder (45) is provided such that it is load-dependent in order to increase the floor contact pressure of a drive wheel (5) of the drive unit (3).

5. Lift truck according to one or more of the preceding claims, characterised in that the suspension system consisting of levers arranged in a parallelogram (41, 42, 44) is formed by two pivotable transverse levers (41, 42) which are rotatably mounted in parallel at a distance which can be selected relative to one another at their first ends in the frame portion (1) which cannot be raised and at their other ends in a longitudinal lever (44) which is fixed for driving.

6. Lift truck according to one or more of the preceding claims, characterised in that the two transverse levers (41, 42) are disposed horizontally and the longitudinal lever (44) is disposed vertically, and the lifting cylinder (45) is mounted in the lower transverse lever (42).

7. Lift truck according to one or more of the preceding claims, characterised in that the lever arm (47) pressing on the drive unit is longer than the other lever arm (48).

8. Lift truck according to one or more of the preceding claims, characterised in that the lifting cylinder (45) is provided with a free-wheel (52) which enables the drive unit (3) to be deflected vertically downwards when the lift truck is lowered.

9. Lift truck according to one or more of the preceding claims, characterised in that the free-wheel (53) is in the form of a resting stroke provided between the top of the supporting and guiding plate (49) and the upper end of the lifting piston (50) of the lifting cylinder (45).

10. Lift truck according to one or more of the preceding claims, characterised in that the lifting cylinder (45) can be displaced and stopped manually and/or automatically in the longitudinal direction of the lift truck for the pre-selectable variation of the lever ratio (47: 48) on the transverse lever (42) of the suspension system arranged as a parallelogram (41, 42, 44).

11. Lift truck according to one or more of the preceding claims, characterised in that at least one pressure spring (27) is disposed between the frame portion (1) which cannot be raised and a component (18) which is rigid for driving for spring pre-loading the drive unit (3).

12. Lift truck according to one or more of the preceding claims, characterised in that the pre-loading of the compression spring (17) can be optionally adjusted preferably by means of a tension nut (28).

## Revendications

1. Chariot de levage, de préférence chariot de levage mobile, commandé par un timon, avec une unité d'entraînement, précontrainte en direction verticale sous l'effet d'un ressort et articulée de façon réglable en hauteur, au moyen d'une suspension à leviers en parallélogramme, à une partie de cadre, non levable, du chariot de levage, et dont la pression de contact au sol peut être modifiée en fonction de la charge et avec au moins un vérin de levage pour la course basse (course de base) d'une partie de cadre levable, caractérisé en ce que le vérin de levage (45) est disposé, en mettant en oeuvre sa force de levage et en prenant appui de manière opposée, directement entre la partie de cadre levable (49) du chariot de levage et la suspension à leviers en parallélogramme (41, 42, 44).

2. Chariot de levage selon la revendication 1, caractérisé en ce que la partie de cadre levable est réalisée sous forme de plaque d'appui et de guidage (49) fixée au cadre support, pour un piston mobile (50) du vérin de levage (45), en vue de servir d'appui au vérin de levage (45), dans la direction de levage.

3. Chariot de levage selon la revendication 1 et/ou 2, caractérisé en ce que le vérin de levage (45) est monté à rotation dans la suspension à leviers en parallélogramme (41, 42, 44), en vue de servir d'appui dans la direction de descente, avec un effet de levier (47 : 48) déterminé, et en ce qu'au moins une partie de sa force d'appui étant transmissible à l'unité d'entraînement (3) par l'intermédiaire d'un (47) de deux bras de leviers (47, 48) formés par le point de tourillonnement (46).

4. Chariot de levage selon l'une ou plusieurs des revendications précédentes, caractérisé en ce que la force d'appui du vérin de levage (45) est prévue dépendante de la charge, en vue d'augmenter la pression de contact au sol d'une roue d'entraînement (5) de l'unité d'entraînement (3).

5. Chariot de levage selon l'une ou plusieurs des revendications précédentes, caractérisé en ce que la suspension à leviers en parallélogramme (41, 42, 44) est composée de deux leviers transversaux (41, 42) pouvant pivoter, tourillonnant parallèlement et à une distance mutuelle pouvant être choisie, le tourillonnement s'effectuant à l'une de leurs extrémités dans la partie de cadre (1) non levable et à l'autre extrémité dans un levier allongé (44), assujetti à l'entraînement.

6. Chariot de levage selon l'une ou plusieurs des revendications précédentes, caractérisé en ce que les deux leviers transversaux (41, 42) sont disposés horizontalement et le levier allongé (44) est disposé verticalement et le vérin de levage (45) tourillonnant dans le levier transversal inférieur (42).

7. Chariot de levage selon l'une ou plusieurs des revendications précédentes, caractérisé en ce que le bras de levier (47) exerçant une pression sur l'unité d'entraînement est plus long que l'autre bras de levier (48).

8. Chariot de levage selon l'une ou plusieurs des revendications précédentes, caractérisé en ce que le vérin de levage (45) est pourvue d'une course libre (52), permettant un débattement de l'unité d'entraînement (3) verticalement vers le bas lorsque le chariot de levage est baissé.

9. Chariot de levage selon l'une ou plusieurs des revendications précédentes, caractérisé en ce que la course libre (52) est réalisée sous forme de course résiduelle, prévue entre la face supérieure de la plaque d'appui et de guidage (49) et l'extrémité supérieure du piston de levage (50) du vérin de levage (45).

10. Chariot de levage selon l'une ou plusieurs des revendications précédentes, caractérisé en ce qu'en vue d'une modification présélectionnable de l'effet de levier (47 : 48) sur le levier transversal (42) de la suspension à leviers en parallélogramme (41, 42, 44), le vérin de levage (45) est susceptible d'être déplacé, manuellement et/ou automatiquement, et bloqué dans la direction longitudinale du chariot de levage.

11. Chariot de levage selon l'une ou plusieurs des revendications précédentes, caractérisé en ce qu'au moins un ressort de pression (27) est disposé entre la partie de cadre non levable (1) et un élément de construction (18) assujetti à l'entraînement, en vue d'exercer une précontrainte élastique sur l'unité d'entraînement (3).

12. Chariot de levage selon l'une ou plusieurs des revendications précédentes, caractérisé en ce que la précontrainte du ressort de pression (17) est réglable à volonté, de préférence au moyen d'un écrou de serrage (28).
